# EUROPÄISCHE PATENTSCHRIFT

(11) **EP 1 839 385 B1**
(45) Veröffentlichungstag und Bekanntmachung des Hinweises auf die Patenterteilung: **22.05.2013**
(21) Anmeldenummer: 06705821.4
(22) Anmeldetag: 20.01.2006
(51) Int. Cl.: H02K 41/03

(54) **LINEARAKTUATOR**
LINEAR ACTUATOR
ACTIONNEUR LINEAIRE

(30) Priorität: 22.01.2005 DE 102005003088; 04.06.2005 DE 102005025723
(43) Veröffentlichungstag der Anmeldung: 03.10.2007
(73) Patentinhaber: Soter, Stefan, 58285 Gevelsberg (DE)
(72) Erfinder: Soter, Stefan, 58285 Gevelsberg (DE)
(74) Vertreter: Pfeifer, Hans-Peter
(86) Internationale Anmeldenummer: PCT/DE2006/000083
(87) Internationale Veröffentlichungsnummer: WO 2006/076900

(56) Entgegenhaltungen:
- EP-A- 0 643 470
- EP-A1- 1 696 541
- WO-A-02/065615
- DE-A1- 2 906 404
- US-A- 5 495 131
- US-A- 5 959 374

## Beschreibung

Die Erfindung betrifft einen Synchron-Linearaktuator umfassend ein statisches Primärteil mit Statorwicklungen und ein Sekundärteil mit Permanentmagneten, das in dem Primärteil in Richtung von dessen axialer Längsachse beweglich angeordnet ist, wobei ein Stromfluß durch die Statorwicklungen eine Bewegung des Sekundärteils in Richtung der Längsachse des Primärteils bewirkt.

Derartige Linearaktuatoren werden zur elektrischen Betätigung von rotierenden Kolben benötigt. Kann nämlich das Sekundärteil des Linearaktuators ebenso wie der zu betätigende Kolben rotieren, so läßt sich ein technisch einfaches Gesamtsystem schaffen.

Planar aufgebaute Linearaktuatoren oder Linearmotoren existieren in den verschiedensten technischen Ausführungen, beispielsweise eisenlos, asynchron oder synchron. Eines ist allen planaren Konstruktionen gemeinsam: Der bewegliche Teil (Sekundärteil) läßt sich nicht drehen. Für Fälle, bei denen dies in Verbindung mit einer hohen Betätigungskraft erforderlich ist, sind Ausführungen von Linearaktuatoren bekannt, bei denen der Aufbau vollständig rotationssymmetrisch ist. Diese Motoren sind nach einem synchronähnlichen Prinzip realisiert. Der bewegliche Teil ist eisenlos und besteht aus Ringpermanentmagneten, die axial magnetisiert sind. Der feststehende Teil (Primärteil) ist aus einer Solenoidwicklung aufgebaut, die zwei- oder dreiphasig ausgeführt ist. Die vergleichsweise einfache Konstruktion ähnelt der eines Elektromagneten. Ein derartiger Linearaktuator ist beispielsweise aus der US 2004/0207270 A1 bekannt.

Bekannte Linearaktuatoren lassen sich nur mit relativ großem Aufwand an die Anforderungen einer gegebenen Anwendung anpassen und haben einen relativ geringen Wirkungsgrad.

Aufgabe der Erfindung ist es einen Weg aufzuzeigen, wie kostengünstig ein Linearaktuator der Eingangs genannten Art mit einem höheren Wirkungsgrad geschaffen werden kann.

Erfindungsgemäß wird diese Aufgabe mit einem Synchron-Linearaktuator gemäß Anspruch 1 gelöst.

Das Sekundärteil ist vorzugsweise nicht nur in axialer Richtung beweglich, sondern auch drehbeweglich in dem Primärteil angeordnet. Es läßt sich einfach und kostengünstig beispielsweise dadurch herstellen, daß Permanentmagnete auf ein magnetisches Trägerrohr aus Eisen oder einem anderen ferromagnetischen Material aufgebracht werden. Als Permanentmagnete können beispielsweise plattenförmige Magnete oder auch ringförmige Magnete mit radialer Magnetisierung verwendet werden. Plattenförmige Magnete haben den Vorteil, besonders kostengünstig erhältlich zu sein. Wichtig ist dabei, daß sämtliche Magnete eines Magnetrings einheitlich orientiert sind, d. h. entweder mit ihrem Nordpol alle radial auswärts oder alle radial einwärts ausgerichtet sind. Ringförmige Magnete haben den Vorteil einer einfacheren Montage.

Auf einem magnetischen Trägerrohr können plattenförmige Permanentmagnete stoffschlüssig, beispielsweise durch Kleben, befestigt werden oder allein durch ihre Magnetkraft haften. Dabei ist es günstig, die Oberfläche des magnetischen Trägerrohrs stellenweise abzuplatten, um eine größere Kontaktfläche zu den plattenförmigen Magneten zu erzielen. Es ist auch möglich, die Permanentmagnete mit einer entsprechender Krümmung auszuführen, so daß sie flächig an einem Trägerrohr mit einem kreisförmigen Außenquerschnitt anliegen.

Zwischen verschiedenen Permanentmagneten können, insbesondere in Längsrichtung des Sekundärteils, also in axialer Richtung, Abstandhalter verwendet werden, beispielsweise um den Magnetfluß und/oder die Gesamtabmessungen des Linearaktuator an die Erfordernisse einer gegebenen Anwendung anzupassen.

Ein wichtiger Vorteil eines erfindungsgemäßen Linearaktuators besteht darin, daß sich Anzahl und Abmessungen der Permanentmagnete in weiten Grenzen frei wählen lassen. Indem unterschiedlich hohe bzw. lange Magnetringe mit Abstandhaltern eingesetzt werden, läßt sich sehr einfach eine Modularität bezüglich der Betätigungskraft bei gleichbleibender Konstruktion realisieren. Die Permanentmagnete können in radialer und in axialer Richtung segmentiert eingesetzt werden, so daß sich der Aktuator mit minimalen Abwandlungen eines gegebenen Aufbaus optimieren läßt. Auf diese Weise kann die Anzahl der verwendeten Bauteile minimiert werden, so daß ein kostenoptimiertes Baukastensystem zur Verfügung steht, mit dem Linearaktuatoren hergestellt werden können, die für die Anforderungen einer gegebenen Anwendung hinsichtlich Betätigungskraft, Betätigungsweg und Versorgungsspannung optimiert sind.

Ein modularer Aufbau ist bei herkömmlichen Linearaktuatoren nicht möglich, da sich bedingt durch die Magnet- und Wicklungsabmessungen alle weiteren Konstruktionsmerkmale ergeben.

Durch den Einsatz radial magnetisierter Permanentmagnete lassen sich bei einem erfindungsgemäßen Linearaktuator kurze Wege des magnetischen Flusses realisieren, so daß ein verbesserter Wirkungsgrad resultiert. Insbesondere läßt sich zwischen den Permanentmagneten und den konzentrierten Statorwicklungen ein sehr kleiner Luftspalt realisieren, so daß sich ein vorteilhaft kurzer Weg des magnetischen Flusses durch die Luft ergibt. Ferner wird durch die radiale Magnetisierung der Permanentmagnete auch der Weg des magnetischen Flusses durch die Magneten selbst minimiert.

Während bei bekannten Linearaktuatoren mit einer axialen Magnetisierung der Permanentmagnete die Befestigung der Magnete und die Führung des Sekundärteils aus nicht magnetischen Materialien gefertigt werden muß, um einen magnetischen Kurzschluß zu vermeiden, können bei einem erfindungsgemäßen Linearaktuator hierfür magnetische Materialien verwendet werden. Durch die größere Auswahl der zur Verfügung stehenden Materialien ergibt sich deshalb bei einem erfindungsgemäßen Linearaktuator eine weitere Möglichkeit zur Einsparung von Kosten.

Zumindest eine der Statorwicklungen, vorzugsweise alle Statorwicklungen, sind bevorzugt jeweils einem (vorzugsweise genau einem) magnetischen Flußkonzentrator zugeordnet, der sich in radialer Richtung erstreckt. Als Flußkonzentrator kann dabei grundsätzlich jedes aus magnetischem Material hergestellte Bauteil dienen, das zumindest teilweise innerhalb der Wicklung angeordnet und so ausgebildet ist, daß es den magnetischen Fluß der jeweils zugeordneten Wicklung konzentriert und die gewünschte radiale Ausrichtung des magnetischen Feldes bewirkt. Besonders günstig ist es, den Flußkonzentrator in der Mitte der Statorwicklung anzuordnen, deren Fluß von ihm konzentriert wird.

Die jeweils einem Flußkonzentrator zugeordneten Statorwicklungen sind als einzeln konzentrierte Wicklungen ausgeführt. Im Rahmen der Erfindung wird unter einzeln konzentrierten Wicklungen verstanden, daß sich die Wicklungen einer Phase im wesentlichen nicht mit den Wicklungen einer anderen Phase überschneiden. Dies bedeutet, daß im wesentlichen sämtliche einen Flußkonzentrator umgebenden Windungen eine Wicklung bilden, die an eine Phase der Versorgungsspannung angeschlossen ist. Hinsichtlich der erzeugten Magnetfelder ergeben sich jedoch praktisch keine Unterschiede, wenn eine geringe Anzahl der einen Flußkonzentrator umgebenden Windungen (weniger als 10 %, bevorzugt weniger als 5 % und besonders bevorzugt weniger als 2 %) von einer anderen Phase gespeist werden. Auch in derartigen Fällen handelt es sich deshalb um konzentrierte Wicklungen im Sinne der vorliegenden Erfindung, die sich "im wesentlichen" nicht mit den Wicklungen einer anderen Phase überschneiden.

Die konzentrierten Wicklungen können um stabförmige Flußkonzentratoren gewickelt sein, die sich in radialer Richtung erstrecken. In diesem Fall gehören zu einer Phase mehrere konzentrierte Wicklungen, die in einer gemeinsamen Ringebene angeordnet sind, wobei sich die Flußkonzentratoren der einzelnen Wicklungen jeweils radial auswärts erstrecken. Eine andere Möglichkeit besteht darin, die konzentrierten Wicklungen um die geometrische Längsachse des Primärteils zu führen. In diesem Fall kann ein Flußkonzentrator in Form einer Scheibe verwendet werden, die bevorzugt zwischen zwei gleich großen Teilen der Statorwicklung angeordnet ist.

Ein erfindungsgemäßer Linearaktuator hat aufgrund der konzentrierten Wicklungen mit Flußkonzentratoren den zusätzlichen Vorteil einer größeren Leistungsdichte, da konzentrierte Wicklungen unmittelbar aneinander angrenzend angeordnet werden können und insbesondere kein Abstandhalter oder Eisenteil zwischen in Längsrichtung benachbarten Wicklungen verschiedener Phasen erforderlich ist.

Bevorzugt weist das Primärteil pro Längeneinheit eine andere Polzahl als das Sekundärteil auf. Diese Maßnahme hat den Vorteil, daß die Kraftschwankungen des Linearaktuators in Bezug auf die Position des Sekundärteils geringer sind. Während bei herkömmlichen Linearaktuatoren hohe Kraftschwankungen ähnlich den Rastmomenten eines drehenden Motors auftreten und deshalb eine exakte Wegregelung oder Positionierung nur in Verbindung mit sehr genauen und dadurch sehr teuren Wegsensoren möglich ist, kann bei einem erfindungsgemäßen Linearaktuator wegen der reduzierten Kraftschwankungen auf Wegsensoren verzichtet werden.

Die Erfindung wird nachfolgend anhand von Ausführungsbeispielen unter Bezugnahme auf die beigefügten Figuren näher erläutert. Gleiche und einander entsprechende Bauteile sind mit übereinstimmenden Bezugszeichen gekennzeichnet. Es zeigen:
- Fig. 1: eine schematische Darstellung eines ersten Ausführungsbeispiels in einem Längsschnitt;
- Fig. 2: das in Fig. 1 dargestellte Ausführungsbeispiel in einem Querschnitt; und
- Fig. 3: ein weiteres Ausführungsbeispiel in einem Querschnitt.

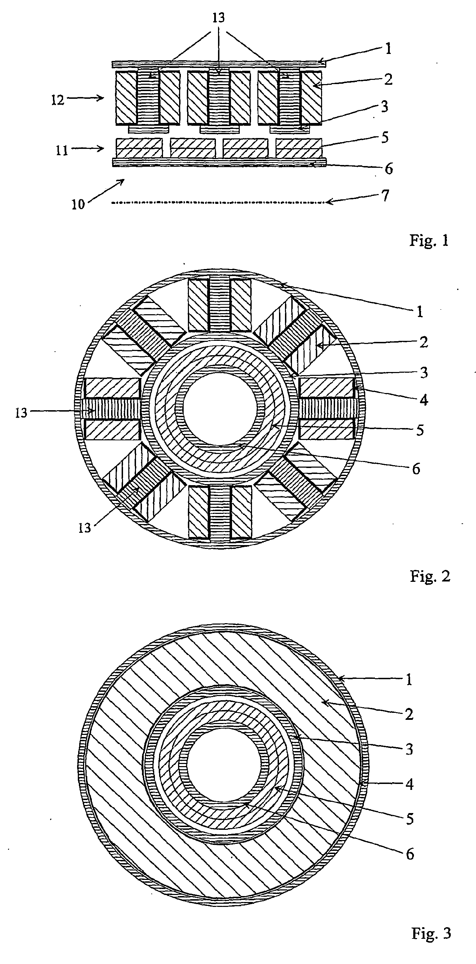

Die in den Figuren 1 und 2 dargestellte bevorzugte Konstruktion beruht auf einem Linearmotor nach dem Synchronprinzip mit Permanentmagneten 5. Ein Sekundärteil 11 ist drehbeweglich um eine Rotationsachse 7, die die Längsrichtung (axiale Richtung) des Sekundärteils 11 und eines statischen Primärteils 10 definiert. Durch den Linearmotor wird das Sekundärteil 11 innerhalb des Primärteils 10 in axialer Richtung angetrieben. Es hat im dargestellten Fall ringförmige Permanentmagnete 5, die radial (also senkrecht zu der Achse 7) magnetisiert und als Ringe oder Hohlzylinder ausgeführt sind.

Die Permanentmagnete 5 sind auf einem magnetischen Träger in Form eines Trägerrohres 6 angeordnet. Das Trägerrohr 6 trägt die Permanentmagnete 5 mechanisch und kann den magnetischen Fluß führen. Das statische Primärteil 12 hat einzelne konzentrierte Statorwicklungen 2, die gleichmäßig radial und axial angeordnet sind. Ein Stromfluß durch die Statorwicklungen 2 bewirkt eine Bewegung des Sekundärteils 11 in axialer Längsrichtung des Primärteils 12. Das Primärteil 12 und das Sekundärteil 11 sind senkrecht zu dieser Bewegungsrichtung im wesentlichen rotationssymmetrisch, so daß das Sekundärteil 11 beliebig gegenüber dem Primärteil 12 verdreht werden kann, ohne daß durch eine derartige Drehbewegung die Funktion des Linearaktuators beeinträchtigt wird.

Abweichungen von der dargestellten rotationssymmetrischen Gestaltung sind grundsätzlich möglich. Dies gilt insbesondere bei Anwendungsfällen, bei denen eine Drehbeweglichkeit des Sekundärteils 11 innerhalb des Primärteils 12 nicht erforderlich ist. In diesem Fall kann prinzipiell auch eine im Querschnitt nicht-runde (beispielsweise elliptische oder ovale) Gestaltung verwendet werden, wobei auch bei einer solchen nicht-runden Gestaltungen die Permanentmagnete des Sekundärteils 11 vorzugsweise so angeordnet sind, daß ihre nach radial außen gerichteten Pole im wesentlichen auf einer Zylinderfläche um die Längsachse des Primärteils liegen. Die gegenüberliegenden den Statorwicklungen 2 zugeordneten Pole liegen bevorzugt ebenfalls im wesentlichen auf einer Zylinderfläche, die mit gleichmäßigem geringem Abstand um die Zylinderfläche der Permanentmagnetpole verläuft. "Im wesentlichen auf einer Zylinderfläche" ist hier so zu verstehen, daß geringe Abweichungen (die beispielsweise aus einer gerade verlaufenden Oberfläche einzelner Permanentmagnete resultieren) zulässig sind, soweit die gegeneinander orientierten Pole der radial orientierten Permanentmagnete und der ebenfalls radial orientierten den Statorwicklungen entsprechenden Elektromagnete in engem Abstand gegenübediegen und durch die zylindrische (nicht notwendigerweise kreiszylindrische) Anordnung eine sehr hohe Dichte der elektromagnetischen Felder auf sehr kleinem Raum erreicht wird.

In einem anderen Zusammenhang und für einen anderen Zweck ist die radiale Anordnung von Permanentmagneten an einem Linearaktuator aus der EP 0 645 877 B1, der EP 0643407A, der DE 2906 404A1, der WO 02/065615A, der US 5 495131 A und der US 5,959,374A bekannt.

In Fig. 1 ist ein Grundsegment 10 eines Ausführungsbeispiels eines Linearaktuators in einem axialen Längsschnitt dargestellt, wobei sich die Darstellung auf eine Hälfte des Längsschnitts (oberhalb der Rotationsachse 7) beschränkt. Die Rotationsachse 7 ist die geometrische (Rotations-) Symmetrieachse in axialer Richtung. Für ein dreiphasiges elektrisches System besteht das Grundsegment 10 aus drei rotationssymmetrischen Ringabschnitten des Primärteils 12 mit einzeln konzentrierten Wicklungen 2 für jede der Phasen und einem rotationssymmetrischen Abschnitt des Sekundärteils 11 mit den zugehörigen Permanentmagneten 5. Diese Grundsegmente 10 können beliebig axial hintereinander angeordnet werden, so daß sich eine Modularität bezüglich des Betätigungsweges und/oder der Betätigungskraft ergibt. Dieser Aufbau ist ideal geeignet um ein Baukastensystem zu realisieren, da teure Bauteile, beispielsweise Magnetringe und Spulen mit Statorwicklungen 2, in allen Ausführungen gleich verwendet werden können und sich so hohe Einsparpotenziale ergeben. Nur die kostengünstigeren Bauteile wie die Trägerrohre 6 sind ausführungsspezifisch.

Die einzelnen Wicklungen einer Phase des statischen Primärteils 12 können unterschiedlich verschaltet werden, so daß sich ohne Leistungsverringerung verschiedene Versorgungsspannungen realisieren lassen. Zur Führung des magnetischen Flusses werden Flußführungsringe 3 eingefügt, die eine optimale Kopplung des beweglichen Sekundärteils 11 und des statischen Primärteils 12 gewährleisten. Die Flußführungsringe 3 homogenisieren den magnetischen Fluß in radialer Richtung und können deshalb auch als Symmetrierungsringe bezeichnet werden. Flußführungsringe 3 ermöglichen kurze Wege des Flusses in Luft und führen deshalb zu einem besonders hohen Wirkungsgrad.

Die Statorwicklungen 2 werden von einem magnetischen Träger 1 in Form eines Rohres mechanisch gehalten, welches ebenfalls den magnetischen Fluß führt und als Gehäuse dient. Die Statorwicklungen 2 haben als Flußkonzentratoren 13 magnetische Kerne. Die stabförmigen Flußkonzentratoren 13 einer Phase können durch einen magnetischen Flußführungsring 3 auf ihrer dem Sekundärteil 11 zugewandten Seite miteinander verbunden werden, so daß sich eine optimierte Flußführung ergibt. Bevorzugt sind die Flußkonzentratoren 13 geblecht mit parallel zu den magnetischen Feldlinien verlaufenden Isolierschichten ausgeführt um Wirbelstromverluste zu minimieren. Die einzelnen Phasen des Linearaktuators sind in jeweils radialen Ebenen axial hintereinander angeordnet.

Die so aufgebauten Grundsegmente 10 des Aktuators mit Flußführungsringen 3 und den konzentrierten Wicklungen 2 sowie dem zugehörigen beweglichen Sekundärteil 11 können sowohl für das Primärteil 12 als auch für das Sekundärteil 11 axial hintereinander angeordnet werden, um so den Betätigungsweg und/oder die Betätigungskraft zu variieren. Verschiedene Verschaltungen der einzelnen konzentrierten Wicklungen erlauben den Betrieb mit unterschiedlichen Betriebsspannungen.

In dem axialen Schnitt von Figur 1 durch ein dreiphasiges Grundsegment 10 des Aktuators sind die drei konzentrierten Statorwicklungen 2 zu erkennen, die jeweils durch einen (in Figur 2 dargestellten) Wickelkörper 4 aus Kunststoff gehalten werden. Das magnetische Material der Flußkonzentratoren 13 des statischen Primärteils 10 führt den magnetischen Fluß und symmetriert diesen durch die magnetischen Flußführungsringe 3 gegenüber den Permanentmagneten 5. Im beweglichen Sekundärteil 11 sind vier Magnete 5 angeordnet, die auf dem magnetischen Trägerrohr 6 befestigt sind. Abstand und Anzahl der Magnete, sowie die Stärke der Magnetisierung können auf einfache Weise durch unterschiedliche Anordnung von dünnen Magnetringen und Abstandhaltern (beispielsweise Ringen aus nichtmagnetischem Material) variiert werden. Als Material für die Permanentmagnete 5 sind Seltenerd-Magnete, insbesondere NdFeB-Magnete, bevorzugt.

In Figur 2 ist ein radialer Schnitt durch den Aktuator genau in einer Wicklungsebene zu sehen. Der äußere als Ring dargestellte Träger 1 ist als durchgängiges Rohr ausgeführt und bildet das Gehäuse des Aktuators. Der dargestellte Linearaktuator hat acht Statorwicklungen 2, deren geometrische Wicklungsachsen jeweils in radialer Richtung verlaufen und die regelmäßig verteilt in dieser Ebene angeordnet sind. Durch unterschiedliche Verschaltung (nämlich durch Parallelschaltung aller Statorwicklungen, durch Parallelschaltung von jeweils zwei oder vier Statorwicklungen und durch Reihenschaltung von allen acht Wicklungen) lassen sich insgesamt vier verschiedene Betriebsspannungen realisieren.

Die Flußführungsringe 3 haben eine ähnliche Funktion wie Polschuhe; sie sorgen dafür, daß der magnetische Fluß möglichst homogen und radial die Permanentmagnete 5 durchdringt. Auf diese Weise ergibt sich für alle möglichen Drehwinkelpositionen des Sekundärteils 11 gegenüber dem Primärteil 12 ein hervorragender Wirkungsgrad. Wichtig dafür ist, daß die Orientierung der von den Permanentmagneten 5 erzeugten Magnetfelder in einer Querschnittsebene gleich ist. Für einen beliebigen Querschnitt verläuft die Magnetisierung der Permanentmagnete 5 also stets einheitlich, d.h. entweder zeigt der magnetische Nordpol auf dem gesamten Umfang des Sekundärteils 11 radial nach außen oder auf dem gesamten Umfang radial nach innen. In entsprechender Weise wechseln die Phasen der Statorwicklungen 2 nur in Längsrichtung ab. Sie zeigen keine Abhängigkeit in Umfangsrichtung, d.h. alle in einer Querschnittsebene liegenden Statorwicklungen sind mit gleichgerichtetem Stromfluß an die gleiche Phase der Versorgungsspannung angeschlossen.

Der Wirkungsgrad wird zusätzlich dadurch erhöht, daß die Abstände der Pole in axialer Richtung bei dem statischen und beweglichen Teil unterschiedlich sind. Bei dem dargestellten Beispiel besteht ein Grundsegment 10, entsprechend der Phasenzahl, aus drei Spulenringen. Dem gegenüber stehen vier ringförmige Permanentmagnete 5, was zu einer erheblichen Vergleichsmäßigung der Kraft, bezogen auf die Position des beweglichen Sekundärteils 11, führt.

Insgesamt bietet die dargestellte Konstruktion optimale Eigenschaften bezüglich der Modularität von Betätigungsweg, Betätigungskraft, und Versorgungsspannung. Sie hat einen hohen Wirkungsgrad und ist, bedingt durch die effektive Materialausnutzung, kostengünstig herzustellen. Ein zusätzlicher Vorteil ist die Möglichkeit einer sensorlosen Regelung der Position des Sekundärteils 11. Alle Eigenschaften zusammen ermöglichen ein optimiertes Baukastensystem für die Betätigung von rotierenden Kolben.

Fig. 3 zeigt einen radialen Schnitt durch ein weiteres Ausführungsbeispiel eines Linearaktuators. Der Unterschied zu dem vorhergehend beschriebenen Ausführungsbeispiel besteht in der Ausführung der Statorwicklungen 2. Der Aufbau des beweglichen Sekundärteils 11 ist unverändert.

Bei dem in Fig. 3 dargestellten Ausführungsbeispiel sind die Statorwicklungen 2 als Topfwicklungen ausgeführt. Die geometrische Wicklungsachse der Statorwicklungen 2 stimmt mit der geometrischen Längsachse (axiale Achse) des Sekundärteils 11 überein. Die Statorwicklung 2 verläuft in der Zeichenebene der Figur 3. Eine Phase des Primärteils 12 wird jeweils von einer konzentrierten radialen Statorwicklung 2 gebildet, die durch einen magnetischen Flußkonzentrator in Form einer Scheibe, beispielsweise aus Eisen, in zwei Teilwicklungen unterteilt ist. Zwischen diesen beiden Teilwicklungen ist jeweils einer der Flußkonzentratoren eingeschlossen. Bevorzugt ist der Flußkonzentrator in der Mitte der Statorwicklung 2 angeordnet, so daß die beiden Teilwicklungen gleich groß sind. Durch diese Ausführung der Statorwicklungen 2 ergeben sich Vorteile bei der Führung des magnetischen Flusses und folglich eine weitere Verbesserung des Wirkungsgrads.

Die scheibenförmigen Flußkonzentratoren schließen bei dem in Fig. 3 dargestellten Ausführungsbeispiel ebenso wie bei stabförmigen Flußkonzentratoren 13 des in Fig. 1 und 2 dargestellten Ausführungsbeispiels an Flußführungsringe 3 an.

Wie bei dem anhand der Figuren 1 und 2 beschriebenen Ausführungsbeispiel werden Teile, die den magnetischen Fluß führen, bevorzugt geblecht ausgeführt. Dies gilt insbesondere für die Flußkonzentratoren 13 und die Flußführungsringe 3, prinzipiell jedoch auch für das Trägerrohr 6 und das die Statorwicklungen 2 umgebende Gehäuserohr des Primärteils 12. Isolierschichten zwischen den einzelnen Blechen lassen sich beispielsweise durch Kunststoffolien oder eine Lackierung bilden.

## Patentansprüche

1. Synchron-Linearaktuator
umfassend ein statisches Primärteil (12) mit Statorwicklungen (2) und ein Sekundärteil (11) mit Permanentmagneten (5), das in dem Primärteil (12) in Richtung von dessen Längsachse beweglich angeordnet ist, wobei ein Stromfluss durch die Statorwicklungen (2) eine Bewegung des Sekundärteils (11) in der Längsrichtung des Primärteils (12) bewirkt,
wobei
die Permanentmagnete (5) des beweglichen Sekundärteils (11) Seltenerd-Magnete sind, die radial magnetisiert sind,
zumindest eine der Statorwicklungen (2), vorzugsweise alle Statorwicklungen (2), jeweils einem magnetischen Flusskonzentrator (13) zugeordnet sind, der sich in radialer Richtung erstreckt,
die Statorwicklungen (2) als einzeln konzentrierte Wicklungen ausgeführt sind,
die Flusskonzentratoren (13) von der jeweils zugeordneten Statorwicklung (2) eingeschlossen sind und
eine Mehrzahl von einer Phase zugehörigen Statorwicklungen in einer gemeinsamen Ringebene angeordnet sind, wobei die Flusskonzentratoren (13) der Statorwicklungen (2) stabförmig sind und sich in radialer Richtung erstrecken, das Primärteil (12) Flussführungsringe (3) aufweist, die jeweils mit einem oder mehreren Flusskonzentratoren (13) einer Phase verbunden sind, und der Abstand zwischen benachbarten Flussführungsringen (3) größer als der Abstand zwischen den Flussführungsingen (3) und einem Trägerrohr (6) ist, auf dem die Permanentmagnete (5) angeordnet sind.

2. Synchron-Linearaktuator
umfassend ein statisches Primärteil (12) mit Statorwicklungen (2) und ein Sekundärteil (11) mit Permanentmagneten (5), das in dem Primärteil (12) in Richtung von dessen Längsachse beweglich angeordnet ist, wobei ein Stromfluss durch die Statorwicklungen (2) eine Bewegung des Sekundärteils (11) in der Längsrichtung des Primärteils (12) bewirkt, wobei
die Permanentmagnete (5) des beweglichen Sekundärteils (11) radial magnetisiert sind,
zumindest eine der Statorwicklungen (2), vorzugsweise alle Statorwicklungen (2), jeweils einem magnetischen Flusskonzentrator (13) zugeordnet sind, der sich in radialer Richtung erstreckt,
die Statorwicklungen (2) als einzeln konzentrierte Wicklungen ausgeführt sind,
die Flusskonzentratoren (13) von der jeweils zugeordneten Statorwicklung (2) eingeschlossen sind und
die Statorwicklungen (2) um die Längsachse des Primärteils (12) herumführen, ein Flusskonzentrator scheibenförmig zwischen zwei Teilen jeweils einer Statorwicklung (2) angeordnet ist und sich an die scheibenförmigen Flusskonzentratoren Flussführungsringe anschließen.

3. Linearaktuator nach Anspruch 1 oder 2, **dadurch gekennzeichnet, dass** er ein dreiphasiger Linearaktuator ist.

4. Linearaktuator nach Anspruch 1, **dadurch gekennzeichnet, dass** die Breite der Flussführungsringe (3) kleiner als die Breite der Permanentmagnete (5), gemessen in Längsrichtung des Sekundärteils (11), ist.

5. Linearaktuator nach einem der vorhergehenden Ansprüche, **dadurch gekennzeichnet, dass** die Permanentmagnete so angeordnet sind, dass ihre nach radial außen gerichteten Pole im Wesentlichen auf einer Zylinderfläche um die Längsachse des Primärteils liegen.

6. Linearaktuator nach einem der vorhergehenden Ansprüche, **dadurch gekennzeichnet, dass** die Orientierung der Permanentmagnete in einer Querschnittsebene gleich ist, so dass sie einheitlich orientierte Magnetringe bilden.

7. Linearaktuator nach einem der vorhergehenden Ansprüche, **dadurch gekennzeichnet, dass** die Permanentmagnete als radial magnetisierte Ringe ausgebildet sind.

8. Linearaktuator nach einem der vorhergehenden Ansprüche, **dadurch gekennzeichnet, dass** die Abstände der Pole in axialer Richtung bei dem Primärteil (12) und bei dem Sekundärteil (11) unterschiedlich sind.

## Claims

1. Synchronous linear actuator, comprising
a static primary part (12) having stator windings (2) and a secondary part (11) having permanent magnets (5), the secondary part (11) being arranged in the primary part (12) so that it is movable in the direction of its longitudinal axis, a current flow through the stator windings (2) causing a movement of the secondary part (11) in the longitudinal direction of the primary part (12),
wherein
the permanent magnets (5) of the movable secondary part (11) are rare earth magnets magnetized radially,
at least one of the stator windings (2), preferably all stator windings (2), are assigned to a magnetic flux concentrator (13) that extends in the radial direction,
the stator windings (2) are designed as individual concentrated windings,
the flux concentrators (13) are enclosed by the respective assigned stator windings (2), and
a plurality of stator windings belonging to one phase is arranged in a comma ring plane, whereby the flux concentrators (13) of the stator windings (2) are rod-shaped and extend in a radial direction, the primary part (12) has flux guide rings (3), each of which is connected to one or more flux concentrators (13) of a phase, and the distance between neighboring flux guide rings (3) is larger than the distance between the flux guide rings (3) and a carrier tube (6) on which the permanent magnets (5) are arranged.

2. Synchronous linear actuator, comprising
a static primary part (12) having stator windings (2) and a secondary part (11) having permanent magnets (5), the secondary part (11) being arranged in the primary part (12) so that it is movable in the direction of its longitudinal axis, a current flow through the stator windings (2) causing a movement of the secondary part (11) in the longitudinal direction of the primary part (12),
wherein
the permanent magnets (5) of the movable secondary part (11) are magnetized radially,
at least one of the stator windings (2), preferably all stator windings (2), are assigned to a magnetic flux concentrator (13) that extends in the radial direction,
the stator windings (2) are designed as individual concentrated windings,
the flux concentrators (13) are enclosed by the respective assigned stator windings (2), and
the stator windings (2) run around the longitudinal axis of the primary part (12), a flux concentrator shaped as a disk is arranged between two parts of a stator winding (2) and flux guide rings are connected to the disk shaped flux concentrators.

3. The linear actuator according to claim 1, **characterized in that** it is a three-phase linear actuator.

4. The linear actuator according to claim 1, **characterized in that** the width of the flux guide rings (3) is smaller than the width of the permanent magnets (5), as measured in the longitudinal direction of the secondary part (11).

5. The linear actuator according to any one of the preceding claims, **characterized in that** the permanent magnets are arranged in such a manner that their poles directed radially outward lie essentially on a cylindrical plane about the longitudinal axis of the primary part.

6. The linear actuator according to any one of the preceding claims, **characterized in that** the orientation of the permanent magnets in a cross-sectional plane is the same, so that they form uniformly oriented magnetic rings.

7. The linear actuator according to any one the preceding claims, **characterized in that** the permanent magnets are designed as radially magnetized rings.

8. The linear actuator according to any one of the preceding claims, **characterized in that** the spacings of the poles in the axial direction are different with the primary part (12) and the secondary part (11).

## Revendications

1. Actionneur linéaire synchrone
comprenant une partie primaire statique (12) avec des enroulements de stator (2) et une partie secondaire (11) avec des aimants permanents (5) qui est disposée de manière mobile dans la partie primaire (12) dans la direction de l'axe longitudinal de cette dernière, un flux de courant à travers les enroulements de stator (2) provoquant un déplacement de la partie secondaire (11) dans la direction longitudinale de la partie primaire (12),
les aimants permanents (5) de la partie secondaire mobile (11) étant des aimants en terre rare qui sont aimantés radialement,
au moins un des enroulements de stator (2), de préférence tous les enroulements de stator (2), étant associé/s à chaque fois à un concentrateur de flux magnétique (13) qui s'étend dans la direction radiale, les enroulements de stator (2) étant exécutés en tant qu'enroulements concentrés individuels,
les concentrateurs de flux (13) étant entourés par l'enroulement de stator (2) associé respectif, et
une pluralité d'enroulements de stator appartenant à une phase étant disposés dans un plan annulaire commun, les concentrateurs de flux (13) des enroulements de stator (2) ayant la forme d'un barreau et s'étendant dans la direction radiale, la partie primaire (12) comprenant des anneaux de guidage de flux (3) qui sont reliés à chaque fois à un ou plusieurs concentrateurs de flux (13) d'une phase et la distance entre des anneaux de guidage de flux (3) contigus étant supérieure à la distance entre les anneaux de guidage de flux (3) et un tube de support (6) sur lequel sont disposés les aimants permanents (5).

2. Actionneur linéaire synchrone
comprenant une partie primaire statique (12) avec des enroulements de stator (2) et une partie secondaire (11) avec des aimants permanents (5) qui est disposée de manière mobile dans la partie primaire (12) dans la direction de l'axe longitudinal de cette dernière, un flux de courant à travers les enroulements de stator (2) provoquant un déplacement de la partie secondaire (11) dans la direction longitudinale de la partie primaire (12),
les aimants permanents (5) de la partie secondaire mobile (11) étant aimantés radialement,
au moins un des enroulements de stator (2), de préférence tous les enroulements de stator (2), étant associé/s à chaque fois à un concentrateur de flux magnétique (13) qui s'étend dans la direction radiale, les enroulements de stator (2) étant exécutés en tant qu'enroulements concentrés individuels,
les concentrateurs de flux (13) étant entourés par l'enroulement de stator (2) associé respectif, et
les enroulements de stator (2) entourant l'axe longitudinal de la partie primaire (12), un concentrateur de flux, en forme de disque, étant disposé entre deux parties d'un enroulement de stator (2) respectif et les concentrateurs de flux en forme de disque se poursuivant par des anneaux de guidage de flux.

3. Actionneur linéaire selon la revendication 1 ou 2, **caractérisé en ce qu'**il s'agit d'un actionneur linéaire triphasé.

4. Actionneur linéaire selon la revendication 1, **caractérisé en ce que** la largeur des anneaux de guidage de flux (3) est inférieure à la largeur des aimants permanents (5), mesurée dans la direction longitudinale de la partie secondaire (11).

5. Actionneur linéaire selon l'une des revendications précédentes, **caractérisé en ce que** les aimants permanents sont disposés de manière à ce que leurs pôles dirigés radialement vers l'extérieur soient situés essentiellement sur une surface cylindrique autour de l'axe longitudinal de la partie primaire.

6. Actionneur linéaire selon l'une des revendications précédentes, **caractérisé en ce que** l'orientation des aimants permanents dans un plan transversal est la même, de sorte qu'ils forment des aimants en forme d'anneau à orientation homogène.

7. Actionneur linéaire selon l'une des revendications précédentes, **caractérisé en ce que** les aimants permanents sont exécutés en tant qu'anneaux à aimantation radiale.

8. Actionneur linéaire selon l'une des revendications précédentes, **caractérisé en ce que** l'espacement des pôles dans la direction axiale est différent pour la partie primaire (12) et pour la partie secondaire (11).
